# EUROPÄISCHE PATENTSCHRIFT

(11) **EP 3 468 730 B1**
(45) Veröffentlichungstag und Bekanntmachung des Hinweises auf die Patenterteilung: **09.04.2025**
(21) Anmeldenummer: 17729047.5
(22) Anmeldetag: 29.05.2017
(51) Int. Cl.: B21D 28/00, B21D 43/02, B21D 43/18, B23K 37/04, B23Q 7/04

(54) **BE- UND ENTLADEVORRICHTUNG FÜR EINE MASCHINE, MASCHINE ZUM BEARBEITEN VON PLATTENFÖRMIGEN WERKSTÜCKEN SOWIE VERFAHREN ZUM BE- UND ENTLADEN EINER SOLCHEN MASCHINE**
LOADING AND UNLOADING DEVICE FOR A MACHINE, MACHINE FOR MACHINING PANEL-LIKE WORKPIECES, AND METHOD FOR LOADING AND UNLOADING SUCH A MACHINE
DISPOSITIF DE CHARGEMENT ET DE DÉCHARGEMENT POUR UNE MACHINE, MACHINE D'USINAGE DE PIÈCES EN FORME DE PLAQUES, ET PROCÉDÉ DE CHARGEMENT ET DE DÉCHARGEMENT D'UNE TELLE MACHINE

(30) Priorität: 08.06.2016 DE 102016110542
(43) Veröffentlichungstag der Anmeldung: 17.04.2019
(73) Patentinhaber: TRUMPF Werkzeugmaschinen SE + Co. KG, 71254 Ditzingen (DE); J. Schmalz GmbH, 72293 Glatten (DE)
(72) Erfinder: DEISS, Magnus, 70372 Stuttgart (DE); EPPERLEIN, Peter, 71229 Leonberg (DE); SCHMAUDER, Frank, 72555 Metzingen (DE); GÄCKLE, Fabian, 75382 Althengstett (DE); OTTNAD, Jens, 76199 Karlsruhe (DE); PROKOP, Heinz-Jürgen, 45134 Essen (DE); STRÖBEL, Stefan, 7203 Trimmis (CH); DUNKMANN, Walter, 76530 Baden-Baden (DE); EISELE, Thomas, 72275 Alpirsbach/Peterzell (DE); HÖHN, Rainer, 72280 Dornstetten (DE); PLAUELN, Dirk, 72280 Dornstetten-Hallwangen (DE); REINISCH, Hermann, 72172 Sulz a. N./Hopfau (DE)
(74) Vertreter: Mammel und Maser Patentanwälte PartG mbB
(86) Internationale Anmeldenummer: PCT/EP2017/062928
(87) Internationale Veröffentlichungsnummer: WO 2017/211611

(56) Entgegenhaltungen:
- WO-A1-96/14965
- DE-A1- 102014 209 811
- DE-B3- 102015 207 122
- JP-A- H04 187 333

## Beschreibung

Die Erfindung betrifft eine Be- und Entladevorrichtung für eine Maschine zur trennenden Bearbeitung von plattenförmigen Werkstücken. Die Erfindung betrifft des Weiteren eine Maschine zum Bearbeiten von plattenförmigen Werkstücken mit einer Be- und Entladevorrichtung. Auch betrifft die Erfindung ein Verfahren zum Entladen von Werkstückteilen auf einer Werkstückauflage einer Maschine zum Bearbeiten von plattenförmigen Werkstücken.

Aus der DE 10 2015 207 122 ist eine Maschine zum Bearbeiten von plattenförmigen Werkstücken mit einer Werkstückauflage zur Lagerung eines zu bearbeitenden Werkstücks während einer Bearbeitung des Werkstücks und zur Lagerung eines bei der Bearbeitung des Werkstücks aus diesem erzeugten Bearbeitungsprodukt bekannt, wobei die Werkstückauflage einen ersten Auflagenteil und einen weiteren Auflagenteil aufweist sowie eine Werkstück-Bewegungsvorrichtung. Der erste Auflagenteil ist als ein beladeseitiger Auflagenteil vorgesehen und in einem Beladebereich der Maschine angeordnet. Der weitere Auflagenteil ist in einem gegenüber dem Beladebereich in horizontaler Richtung versetzten Entladebereich der Maschine vorgesehen. Der erste Auflagenteil ist auf ein Beladeniveau sowie auf ein Ausweichniveau oberhalb des Beladeniveaus bewegbar. Der weitere Auflagenteil ist aus dem Entladebereich in den Beladebereich verfahrbar.

Unterhalb des ersten Auflagenteils im Beladebereich ist eine Beladevorrichtung vorgesehen, durch welche ein unbearbeitetes Werkstück ergriffen und angehoben werden kann, um darauffolgend das unbearbeitete Werkstück auf dem zwischenzeitlich in den Beladebereich eingefahrenen weiteren Auflagenteil abzulegen. Anschließend wird der weitere Auflagenteil wieder in den Entladebereich verfahren und der erste Auflagenteil abgesenkt, so dass beide Auflagenteile in einem Arbeitsniveau liegen.

Zur Entnahme der bearbeiteten Werkstückteile von einem ersten Auflagenteil kann eine separate Handlingseinrichtung vorgesehen sein. Alternativ ist eine manuelle Entnahme der bearbeiteten Bauteile möglich. Kleinere Werkstückteile können durch einen Spalt zwischen dem ersten Auflagenteil und dem weiteren Auflagenteil ausgeschleust werden. Ein solches Ausschleusen von bearbeiteten Werkstückteilen ist aus der DE 10 2013 226 818 B4 bekannt.

Des Weiteren ist aus der US 2003/0147729 A1 eine Maschine mit einer Werkstückauflage bekannt, bei der neben der Werkstückauflage eine Handlingsvorrichtung angeordnet ist. Durch diese Handlingsvorrichtung wird ein unbearbeitetes Werkstück der Werkstückauflage zugeführt. Quer zur Bewegungsrichtung der Werkstückauflage wird das zu bearbeitende Werkstück mittels einer Werkstück-Bewegungsvorrichtung bewegt. Darauf folgend wird das zu bearbeitende Werkstück in der für die Bearbeitung erforderlichen Weise in einer horizontalen Ebene gegenüber einem Bearbeitungswerkzeug der Maschine zugestellt. Nach der Bearbeitung des plattenförmigen Werkstücks wird ein bei der Werkstückbearbeitung erzeugtes Bearbeitungsprodukt (Restgitter) mittels der Werkstück-Bewegungsvorrichtung auf den entladeseitigen Auflagenteil bewegt. Gemeinsam mit dem Bearbeitungsprodukt fährt der entladeseitige Auflagenteil über eine horizontale Plattform der Handlingvorrichtung. Anschließend wird das Bearbeitungsprodukt von einem Greifer der Handlingvorrichtung erfasst. Darauf folgend wird das entladeseitige Auflagenteil unter dem Bearbeitungsprodukt herausgezogen. Das Bearbeitungsprodukt wird anschließend unter Schwerkraftwirkung auf der unterhalb des Bearbeitungsproduktes angeordneten horizontalen Plattform der Handlingvorrichtung abgelegt.

Aus der DE 10 2014 209 811 A1 ist des Weiteren eine Maschine zur Bearbeitung von plattenförmigen Werkstücken bekannt, bei welcher nach dem Trennen von Werkstückteilen aus einem plattenförmigen Werkstück eine unterhalb des Werkstücks vorgesehene Aushebevorrichtung zu dem zu entnehmenden Werkstückteil positioniert wird. Oberhalb des zu entnehmenden Werkstückteils wird ein Gegenhalter positioniert. Anschließend wird das einerseits durch die Aushebevorrichtung beaufschlagte und andererseits durch den Gegenhalter abgestützte, zu entnehmende Werkstückteil durch die Aushebevorrichtung senkrecht zur Werkstückauflagefläche mit einer Entnahmebewegung in Ausheberichtung bewegt. Anschließend wird das Werkstückteil mittels des Gegenhalters in eine Be- und Entladestation verfahren und abgelegt.

Aus der WO 96/14965 A1 ist eine Vorrichtung zum Greifen und zum Handhaben von plattenförmigen Materialien bekannt. Die Werkstückauflage weist Rollen auf, auf welchen das Werkstück aufliegt. Ergänzend sind zur Unterseite des Werkstücks ausgerichtet Saugelemente vorgesehen, welche eine Transfereinheit für das aufliegende Werkstück bilden.

Der Erfindung liegt die Aufgabe zugrunde, eine Be- und Entladevorrichtung sowie eine Maschine zum Bearbeiten von plattenförmigen Werkstücken, und ein Verfahren zum Be- und Entladen von Werkstücken und Werkstückteilen vorzuschlagen, durch welche kompakte Bauformen und eine Mehrfachnutzung von Bewegungsachsen und Bewegungsvorrichtungen ermöglicht ist.

Die der Erfindung zugrundeliegende Aufgabe wird durch eine Be- und Entladevorrichtung für eine Maschine zum trennenden Bearbeiten von plattenförmigen Werkstücken gelöst, welche zumindest ein Be- und Entlademodul mit einer vertikal nach oben ausgerichteten Aushebevorrichtung zum Anheben eines freigetrennten Werkstückteils gegenüber einer Werkstückauflage und eine vertikal nach unten ausgerichtete Greifvorrichtung zum Fixieren von einem unbearbeiteten plattenförmigen Werkstück aufweist. Tragstreben der Be- und Entladevorrichtung, die das Be-und Entlademodul tragen, können an einem Maschinen-Grundgestell oder an einem eigenen Grundgestell der Be- und Entladevorrichtung auf und ab bewegbar aufgenommen sein. Somit kann das Be- und Entlademodul auf ein Beladeniveau abgesenkt werden, so dass das Greifen von einem unbearbeiteten Werkstück ermöglicht ist, um anschließend auf ein höheres Niveau angehoben zu werden, um das plattenförmige Material auf einem Auflagenteil einer Werkstückauflage abzulegen. Des Weiteren kann das Be- und Entlademodul entlang derselben Achse und mittels derselben Bewegungsvorrichtung auf ein Aushebeniveau angehoben werden, um das auf einem Auflagenteil der Werkstückauflage aufliegende und bearbeitete Werkstückteil gegenüber der Werkstückauflagefläche der Werkstückauflage nach oben auszuheben. Die Tragstreben können an einem geschlossenen Tragrahmen ausgebildet sein, der mindestens einen Tragbalken verfahrbar lagert, an welchem das Be- und Entlademodul verfahrbar gelagert ist. Alternativ können die Tragstreben ohne gegenseitige Verbindung geführt in einem Grundgestell gelagert sein oder mindestens eine Querstrebe zur gegenseitigen Verbindung aufweisen.

Bei der Be- und Entladevorrichtung ist bevorzugt vorgesehen, dass die Aushebevorrichtung oberhalb und die Greifvorrichtung unterhalb des Tragbalkens, der an den Tragstreben oder am Tragrahmen verfahrbar ist, positioniert sind. Dadurch kann eine kompakte Bauweise geschaffen werden, um diese Be- und Entladevorrichtung auch in ein Grundgestell einer Maschine mit einer Werkstückauflage integrieren zu können.

Die Aushebevorrichtung und die Greifvorrichtung sind bevorzugt durch einen gemeinsamen Führungsabschnitt feststehend einander zugeordnet und vorzugsweise durch den Führungsabschnitt an dem Tragbalken gelagert sowie gemeinsam entlang des Tragbalkens verfahrbar. Dies trägt zur kompakten Bauform der Be- und Entladevorrichtung bei. Außerdem wird die Ansteuerung für eine Positionierung und eine Verfahrbewegung entsprechend der Handhabungsaufgabe der Aushebevorrichtung und/oder der Greifvorrichtung vereinfacht.

Bevorzugt ist vorgesehen, dass die Aushebevorrichtung und die Greifvorrichtung des Be- und Entlademoduls in Längsrichtung des Tragbalkens versetzt angeordnet sind, so dass in einer Endposition des Be- und Entlademoduls relativ zum Tragbalken die Aushebevorrichtung oberhalb einer Tragstrebe positioniert ist. Dies weist beispielsweise den Vorteil auf, dass die Aushebevorrichtung in dieser Endposition nahe zu einer Bearbeitungsposition, z.B. einem Schneidspalt zwischen einem ersten und einem zweiten Auflagenteil der Werkstückauflage, positioniert werden kann und auch Werkstückteile ausgehoben und entladen werden können, die nahe dem Schneidspalt positioniert sind.

An dem zumindest einen Tragbalken der Be- und Entladevorrichtung können mehrere Be- und Entlademodule vorgesehen sein, die in eine Position zueinander überführbar sind, in der die Aushebevorrichtungen aneinandergrenzend angeordnet sind und eine großflächige Aushebeeinheit bilden. Dies ermöglicht eine hohe Flexibilität bei einem Entladeprozess. Beispielsweise können die einzelnen, an dem Tragbalken vorgesehenen Be- und Entlademodule jeweils verschiedentlichen Werkstückteilen zugeordnet werden, oder aber in Abhängigkeit der Anzahl der aneinandergereihten Aushebeeinrichtungen eine großflächige Aushebeeinheit bilden.

Vorteilhafterweise sind die an dem Tragbalken angeordneten Be- und Entlademodule mit einem gemeinsamen Antrieb verfahrbar angetrieben. Dadurch kann wiederum eine kostengünstige und kompakte Ausgestaltung geschaffen werden. Zur einzelnen Ansteuerung der Be-und Entlademodule für eine Verfahrbewegung entlang des Tragbalkens kann an jedem Be- und Entlademodul eine ansteuerbare Kupplung vorgesehen sein, die zum Antrieb ankoppelbar ist.

Zur Positionierung des Be- und Entlademoduls in einer Aushebeposition kann zunächst entlang eines ersten Verfahrweges eine Grobpositionierung erfolgen, die mit Hilfe einer Wegmesseinrichtung des Antriebes für das Be-und Entlademodul angesteuert wird. Anschließend kann durch einen Vergleich der Messwerte der Wegmesseinrichtung des Antriebs mit einem Absolut-Wertmesssystem eine Feinpositionierung des Be- und Entlademoduls erfolgen. Dadurch wird für die Aushebeposition eine exakte Positionierung des Be- und Entlademoduls entlang des Tragbalkens eingestellt, um ein sicheres Ausheben des Werkstückteils gegenüber der Werkstückauflagefläche zu ermöglichen.

Bei der Be- und Entladevorrichtung ist des Weiteren bevorzugt vorgesehen, dass an den Tragstreben oder am Tragrahmen wenigstens ein entlang der Tragstreben bzw. des Tragrahmens angetrieben verfahrbarer Tragbalken und ein verfahrbarer und nicht angetriebener Tragbalken angeordnet sind. Dieser nicht angetriebene Tragbalken wird durch den benachbarten angetriebenen Tragbalken mit verfahren, nach einem sogenannten Master-Slave-Prinzip. Dadurch kann ein Antrieb eingespart werden. Um den nicht angetriebenen Tragbalken ziehend mit verfahren zu können, muss eine Kopplungsvorrichtung zum Koppeln der beiden Tragbalken vorgesehen sein. Insbesondere können an der Be- und Entladevorrichtung zwei entlang der Tragstreben oder des Tragrahmens angetrieben verfahrbare Tragbalken und ein dazwischen liegender, verfahrbarer und nicht angetriebener Tragbalken angeordnet sein, so dass der nicht angetriebene Tragbalken durch jeweils einen der beiden angetriebenen Tragbalken schiebend in positiver und negativer Richtung bewegt werden kann und keine Kopplungsvorrichtung notwendig ist.

Des Weiteren ist bevorzugt vorgesehen, dass der nicht angetriebene Tragbalken nur zumindest eine Greifvorrichtung und keine Aushebevorrichtung aufweist. Die Greifvorrichtung unterstützt den Beladevorgang mit großen plattenförmigen Werkstücken, damit diese nicht durchhängen. Da die freigetrennten bzw. bearbeiteten Werkstückteile kleiner als die unbearbeiteten Werkstücke sind, ist die Anzahl der Aushebevorrichtungen der Be- und Entladevorrichtung vorteilhafterweise geringer gewählt als die Anzahl der Greifvorrichtungen.

Bevorzugt ist vorgesehen, dass mehrere Greifvorrichtungen des nicht angetriebenen Tragbalkens an einem Schlitten angeordnet sind, der entlang des Tragbalkens verfahrbar ist. Diese Greifvorrichtungen können daher durch das unbearbeitete Werkstück mitbewegt werden, wenn dieses beispielsweise beim Einschieben in die Spannpratzen einer Werkstück-Bewegungseinheit horizontal bewegt wird. Zur Rückstellung dieser Greifvorrichtungen bzw. des Schlittens in die Ausgangsposition kann ein Rückstellelement, insbesondere ein Pneumatik-Zylinder oder eine Feder, vorzugsweise im Tragbalken, vorgesehen sein.

Des Weiteren ist bevorzugt vorgesehen, dass die Aushebevorrichtung des Be- und Entlademoduls sich quer zum Tragbalken derart erstreckt, dass bei einer Aneinanderreihung von zwei angetriebenen Tragbalken und einem dazwischen liegenden Tragbalken ohne Aushebevorrichtung die beiden Aushebevorrichtungen der angetriebenen Tragbalken stirnseitig aneinander anliegen (angrenzen). Auf diese Weise entsteht eine geschlossene Aushebefläche, wenn mehrere Aushebevorrichtungen zum Einsatz kommen, um große Werkstückteile auszuheben.

Die Aushebevorrichtung der Be- und Entlademodule besteht vorteilhafterweise aus mehreren einzeln ansteuerbaren Stiftmodulen, welche einen oder mehrere Aushebestifte aufweisen, die aus- und einfahrbar, vorzugsweise auch einzeln, angesteuert sind. Dies ermöglicht es, einzelne Stiftmodule zu tauschen sowie die Aushebevorrichtung auf einfache Weise um weitere Stiftmodule zu erweitern, wenn die Ausdehnung der Aushebevorrichtung verändert werden soll.

Vorteilhafterweise ist die Ausfahrbewegung der Aushebestifte pneumatisch angesteuert. Eine Druckkraft der einzelnen Aushebestifte kann in Abhängigkeit von der Zahl der auszufahrenden Aushebestifte einstellbar sein. Jeder Aushebestift kann beispielsweise eine Kraft von 100 Newton aufbringen. Werden mehrere Aushebestifte zum Ausheben eines Werkstückteils genutzt, so kann die Kraft der einzelnen Aushebestifte beschränkt werden, so dass die Gesamtkraft unterhalb eines festgelegten Grenzwertes liegt.

Die Greifvorrichtung des Be- und Entlademoduls umfasst vorzugsweise zumindest ein Saugelement, insbesondere einen Vakuumsauger, der vorteilhafterweise in vertikaler Richtung auf und ab bewegbar ist. Durch die vertikale Verfahrbewegung der Greifvorrichtung ist ermöglicht, dass eine Lösestrategie beim Greifen und Abheben eines unbearbeiteten Werkstücks aus einem Stapel von unbearbeiteten Werkstücken gegeben ist, auch wenn eine erhöhte Adhäsionskraft zwischen dem abzuhebenden Werkstück und dem auf dem Stapel verbleibenden Werkstück gegeben sein sollte. Durch eine zeitversetzte vertikale Bewegung mehrerer Greifvorrichtungen entlang eines Tragbalkens kann ein sogenannter Abschälvorgang eingeleitet und durchgeführt werden.

Sowohl die Bewegung der Aushebestifte als auch die vertikale Bewegung der Greifvorrichtung des Be- und Entlademoduls können durch eine gemeinsame Druckluftversorgung ansteuerbar sein. Dadurch wird wiederum der Aufbau vereinfacht und eine kompaktere Bauweise erzielt.

Benachbart zur Greifvorrichtung kann vertikal nach unten gerichtet an dem Be- und Entlademodul ein Niederhalter angeordnet sein. Dadurch kann das anzuhebende Werkstück während einer vertikalen Anhebe-Bewegung der Greifvorrichtung niedergehalten werden, um so das Abschälen des Werkstücks vom Werkstückstapel zu unterstützen.

Die der Erfindung zugrundeliegende Aufgabe wird des Weiteren durch eine Maschine zum trennenden Bearbeiten von plattenförmigen Werkstücken mit einer Werkstückauflage zur Lagerung eines zu bearbeitenden Werkstücks und zur Lagerung eines bearbeiteten Werkstückteils gelöst, bei der eine Be- und Entladevorrichtung nach einer der vorbeschriebenen Ausführungsformen vertikal bewegbar unterhalb der Werkstückauflage oder seitlich benachbart zu der Werkstückauflage vorgesehen ist und bei der die Werkstückauflage oder ein Auflagenteil der Werkstückauflage horizontal über und unter die Be- und Entladevorrichtung bewegbar oder verfahrbar ist.

Bei einer ersten Ausführungsform der erfindungsgemäßen Maschine ist vorgesehen, dass die Werkstückauflage einen ersten Auflagenteil und einen weiteren Auflagenteil aufweist, wobei der weitere Auflagenteil horizontal bewegbar ist, und dass die Be- und Entladevorrichtung unterhalb des ersten Auflagenteils angeordnet ist. Dadurch kann die Be-und Entladevorrichtung platzsparend innerhalb einem Maschinen-Grundgestell der Maschine integriert und positioniert werden.

Die Tragstreben oder der Tragrahmen der Be- und Entladevorrichtung sind in diesem Fall vorzugsweise dazu ausgebildet, auch den ersten Auflagenteil der Werkstückauflage aufzunehmen und zu tragen. Auf diese Weise kann der erste Auflagenteil gemeinsam mit der Be- und Entladevorrichtung in der Höhe verfahren werden, so dass der weitere Auflagenteil mittels einer horizontalen Verfahrbewegung unter dem ersten Auflagenteil und unter der Be- und Entladevorrichtung positioniert werden kann, um mit einem unbearbeiteten Werkstück beladen zu werden. Dazu müssen die Tragstreben oder der Tragrahmen der Be- und Entladevorrichtung so weit nach oben bewegbar sein, dass der weitere Auflagenteil unter den Greifvorrichtungen mit dem daran festgelegten Werkstück angeordnet werden kann.

Gemäß der zweiten Alternative ist besonders bei bestehenden Maschinen eine Anordnung der Be- und Entladevorrichtung in einem eigenen Gestell neben dem Maschinen-Grundgestell oder der Werkstückauflage der Maschine ermöglicht, um das Be- und Entladen zu automatisieren und dadurch eine Taktzeitreduzierung sowie eine daraus resultierende Prozesszeitoptimierung zu erzielen. Voraussetzung dafür ist es, dass die Werkstückauflage oder zumindest ein Auflagenteil der Werkstückauflage der Maschine horizontal verfahrbar ist, um über und unter der Be- und Entladevorrichtung positionierbar zu sein.

Wenn die Werkstückauflage oder ein Auflagenteil der Maschine durch mehrere Profilkörper gebildet ist, die parallel zueinander unter Bildung jeweils eines Spaltes beabstandet sind und wenn die Aushebevorrichtung mehrere Aushebestifte zum Aus- und Einfahren aufweist, die in der Richtung senkrecht zu den Profilkörpern einen Abstand zueinander aufweisen, der dem Abstand der Spalte entspricht, so ermöglicht das eine flexible Positionierung der Be- und Entlademodule. In einer Richtung parallel zu den Spalten zwischen den Profilkörpern können die Be- und Entlademodule beliebig stufenlos positioniert werden.

Vorteilhafterweise weist die Werkstückauflage eine Werkstückauflagefläche auf, die durch mehrere Profilkörper gebildet ist, die parallel zueinander beabstandet sind und zwischen zwei benachbarten Profilkörpern jeweils einen Spalt bilden. Jeder der Profilkörper nimmt entweder Auflagekugeln oder Rollen zur Lagerung eines Werkstücks oder zumindest ein Bürstenelement auf, welches sich entlang des Profilkörpers erstreckt und auf welchem ein durch die Werkstückauflage unterstütztes Werkstück aufliegt. Eine solche Werkstückauflagefläche ermöglicht in einer Richtung einer X-Y-Ebene, entlang der sich die Profilkörper der Werkstückauflagefläche erstrecken, eine stufenlose Positionierung von Aushebestiften einer Aushebevorrichtung. Somit ist in einer Richtung der X-Y-Ebene unabhängig von einem Raster oder Lochmuster der Werkstückauflage durch die Aushebevorrichtung eine Aushebeposition ansteuerbar und kann stufenlos eingenommen werden. Bevorzugt erstrecken sich die zwischen den Profilkörpern gebildeten Spalte parallel zu einer (Haupt-)Verfahrachse eines Bearbeitungswerkzeuges der Maschine. Eine vorzugsweise erzeugte Verfahrbewegung des plattenförmigen Werkstücks auf der Werkstückauflage bzw. dem Auflagenteil erfolgt vorteilhafterweise in der zu den Spalten senkrechten Richtung in der XY-Ebene. Diese Anordnung ermöglicht eine maximale Flexibilität beim Positionieren der Aushebevorrichtung(en) relativ zu auszuhebenden Werkstückteil. In der Richtung senkrecht zu den Spalten, in welcher eine Aushebevorrichtung an das Raster der Spalte in der Werkstückauflage gebunden und nicht stufenlos positionierbar ist, kann bei dieser Anordnung das Werkstück(teil) stufenlos verschoben werden. Das hat zur Folge, dass trotz des Rasters in der Werkstückauflage eine stufenlose Positionierung der Aushebevorrichtung relativ zum Werkstückteil möglich ist.

Bevorzugt ist vorgesehen, dass die Profilkörper in ihrer Längserstreckungsrichtung biegesteif ausgebildet sind. Dadurch können auch größere Werkstückauflageflächen überspannt werden und es wird eine ebene Auflagefläche geschaffen. Vorteilhafterweise sind die Profilkörper als Rechteckrohre oder als T-förmige oder H-förmige Profilkörper ausgebildet. Um eine ausreichende Biegesteifigkeit der Profile zu gewährleisten, ist vorzugsweise vorgesehen, dass das Verhältnis einer Länge der Profilkörper zu einer Breite der Profilkörper kleiner als 150 ist. Die Profilkörper weisen also abhängig von ihrer Länge eine Mindestbreite auf, so dass sie durch die Reibungskräfte bei der Bewegung eines aufliegenden Werkstücks nicht zu stark verbogen werden. Um eine ausreichende Biegesteifigkeit der Profilkörper senkrecht zur Werkstückauflagefläche zu erreichen, liegt vorzugsweise das Verhältnis einer Länge zu einer Höhe der Profilkörper unter 100.

Die hier angegebenen Grenzwerte können überschritten werden, wenn die Profilkörper - beispielsweise in der Mitte der Werkstückauflagefläche - durch einen Quersteg miteinander verbunden werden. Ein solcher Quersteg verringert jedoch die Flexibilität bei der Positionierung der Aushebestifte, da er einen Totbereich für die Wirkung der Aushebestifte bewirkt.

Die Profilkörper weisen bevorzugt eine zur Werkstückauflagefläche parallel ausgerichtete Stirnseite auf, an der ein Bürstenelement vorgesehen ist. Dadurch kann eine durch Bürsten gebildete Werkstückauflagefläche geschaffen sein, entlang der das zu bearbeitende Werkstück zumindest in einer Richtung mit einer geringen Reibung zur Bearbeitung hin und her bewegt werden kann.

Des Weiteren ist bevorzugt vorgesehen, dass das Bürstenelement mehrere Borstenbündel umfasst und dass zumindest eine sich entlang der äußeren Längskante des Bürstenelementes erstreckende Reihe von Borstenbündeln gegenüber einer vertikalen Ausrichtung seitlich nach außen geneigt ist. Der Neigungswinkel dieser Borstenbündel liegt von der Senkrechten der Werkstückauflage ausgehend nach außen dabei bevorzugt unter 45°, damit über die Werkstückauflage bewegte Werkstücke nicht mit den Borstenbüscheln verhaken.

Durch diese Bürstenelemente auf den Profilkörpern kann der dazwischen liegende Spalt verkleinert werden, so dass eine ausreichend geschlossene Werkstückauflage gebildet wird und Werkstücke mit beliebiger Kontur auf der Werkstückauflage hin und her bewegt werden können, ohne sich zu verhaken. Hierfür ist bevorzugt an keiner Stelle der Werkstückauflage ein unbebürsteter Spalt ausgebildet, jedenfalls soll eine zwischen zwei Bürstenelementen entlang des Spalts verbleibende Lücke kleiner als 10 mm sein.

Besonders bevorzugt ist der Abstand der Spaltmitten der zwischen den Profilkörpern gebildeten Spalte kleiner als 100 mm, um eine ausreichende Flexibilität für die Positionierung einer Aushebevorrichtung, die durch die Spalte hindurch auf ein aufliegendes Werkstückteil einwirkt, zu gewährleisten.

Die der Erfindung zugrundeliegende Aufgabe wird des Weiteren durch ein Verfahren zum Be- und Entladen einer in den vorhergehenden Abschnitten beschriebenen Maschine zum trennenden Bearbeiten von plattenförmigen Werkstücken gelöst, bei dem zwischen dem Entladen eines freigetrennten Werkstückteils mit Hilfe von zumindest einer Aushebevorrichtung eines Be- und Entlademoduls der Be- und Entladevorrichtung und dem Beladen der Werkstückauflage mit einem neuen Werkstück eine vertikale Bewegung der Be- und Entladevorrichtung und eine horizontale Bewegung der Werkstückauflage oder eines Auflagenteils der Werkstückauflage erfolgt, so dass die Werkstückauflage oder der Auflagenteil über oder unter der Be- und Entladevorrichtung angeordnet ist. Durch ein solches Verfahren wird eine Mehrfachnutzung von Bewegungsachsen und Antrieben ermöglicht.

Bevorzugt wird ein solches Verfahren an einer Werkstückauflage mit mehreren parallel zueinander angeordneten Profilkörpern ausgeführt, zwischen denen ein Spalt gebildet ist, bei dem das zumindest eine Be-und Entlademodul der Be- und Entladeeinrichtung mit der Aushebeeinrichtung in eine Entladeposition unterhalb des auf der Werkstückauflage aufliegenden und auszuhebenden Werkstückteils positioniert wird.

Weist die Aushebevorrichtung der Be- und Entladevorrichtung Aushebestifte auf, so können die Aushebestifte zum Ausheben eines Werkstückteils durch die zwischen den Profilkörpern gebildeten Spalte in der Werkstückauflage der Maschine hindurchgeführt und zur Anlage an der Unterseite des auszuhebenden Werkstückteils übergeführt werden. Dies ermöglicht eine flexible und damit schnelle Positionierung der Aushebevorrichtung in Richtung parallel zu den Profilkörpern.

Die Aushebestifte der Aushebeeinrichtung können beispielsweise während einer Ausfahrbewegung aus der Aushebevorrichtung durch den jeweiligen Spalt zwischen zwei Profilkörpern hindurchgeführt und zumindest zur Anlage an der Unterseite des Werkstückteils übergeführt werden.

Wenn mehrere Aushebestifte beim Ausheben an dem Werkstückteil anliegen bzw. angreifen, kann ein verkippungsfreies Ausheben erfolgen. Zum Ausheben des Werkstückteils ist kann es vorgesehen sein, dass vor dem Ausheben des Werkstückteils mit den Aushebestiften ein Halteelement von oben auf das Werkstückteil zubewegt und in eine Greifposition übergeführt wird und anschließend die Ausfahrbewegung der Aushebestifte angesteuert und die Aushebestifte zur Anlage an die Unterseite des auszuhebenden Werkstückteils geführt werden und schließlich das Halteelement und die Aushebestifte gegenüber der Werkstückauflagefläche gemeinsam nach oben gefahren werden. Dadurch erfolgt ein gesichertes Ausheben. Durch die von der Unterseite des Werkstückteils wirkenden Aushebestifte wird sichergestellt, dass ein Werkstückteil ohne Verhaken oder Verkanten im Restgitter ausgehoben wird.

Alternativ ist vorgesehen, dass die Ausfahrbewegung der Aushebestifte derart angesteuert wird, dass das Werkstückteil gegenüber der Werkstückauflage abgehoben wird und anschließend das Halteelement von oben auf das Werkstückteil zugeführt wird und das gegenüber dem Restgitter angehobenen Werkstückteil greift und beispielsweise in eine Entladestation überführt.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht einer Maschine zum Schneiden von Blechen mit einer zweiteiligen Werkstückauflage,
Figur 2 eine perspektivische Ansicht eines ersten Auflagenteils einer Werkstückauflage der Maschine gemäß Figur 1,
Figur 3 eine perspektivische Ansicht einer Be- und Entladevorrichtung,
Figur 4 eine perspektivische Ansicht eines Be- und Entlademoduls,
Figur 5 eine perspektivische Ansicht des Be- und Entlademoduls am Tragbalken,
Figur 6 eine perspektivische Ansicht einer Greifvorrichtung des Be-und Entlademoduls am Tragbalken,
Figur 7 eine perspektivische Ansicht der Aushebevorrichtung in einer Arbeitsposition,
Figur 8 eine perspektivische Ansicht von einer Anordnung mehrerer Be- und Entlademodule an einem Tragbalken,
Figur 9 eine perspektivische Ansicht von mehreren, nebeneinander angeordneten Tragbalken der Be- und Entladevorrichtung,
Figur 10 eine schematische Schnittansicht einer Werkstückauflage des ersten und weiteren Auflagenteils,
Figuren 11 bis 14 eine perspektivische Ansicht der Maschine gemäß Figur 1 in verschiedenen Arbeitssituationen, und
Figur 15 eine perspektivische Ansicht der Maschine gemäß Figur 1 mit einer alternativen Anordnung der Be- und Entladevorrichtung.

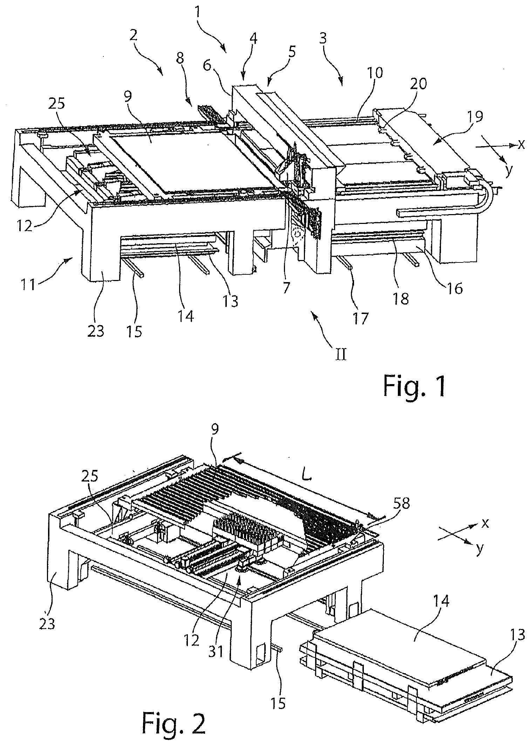

In Figur 1 ist perspektivisch eine Maschine 1 dargestellt, welche beispielsweise als eine Laserschneidmaschine ausgebildet sein kann. Diese weist einen Beladebereich 2 und einen Entladebereich 3 auf. Zwischen dem Beladebereich 2 und dem Entladebereich 3 ist eine Bearbeitungsstation 4 angeordnet. Die Bearbeitungsstation 4 umfasst eine portalartige Führungsstruktur 5 mit einem Portalträger 6. Längs des Portalträgers 6 ist ein Bearbeitungskopf, insbesondere Laserschneidkopf 7, in einer ersten Achsrichtung (Y-Achsrichtung) verfahrbar. Wasserstrahlschneidmaschinen, Laserschweißmaschinen, Stanzmaschinen oder kombinierte Stanz-Laserschneidmaschinen stellen weitere Beispiele für die Maschine 1 gemäß Figur 1 dar.

Unterhalb des Portalträgers 6 der Maschine 1 erstreckt sich beidseits der Bearbeitungsstation 4 eine Werkstückauflage 8. Die Werkstückauflage 8 ist zweiteilig ausgebildet und umfasst einen beladeseitigen Auflagenteil 9, sowie einen weiteren Auflagenteil 10, der relativ zu dem beladeseitigen Auflagenteil 9 in einer zweiten Achsrichtung (X-Richtung) bewegbar ist. In Figur 1 ist der weitere Auflagenteil 10 in dem Entladebereich 3 der Maschine 1 angeordnet.

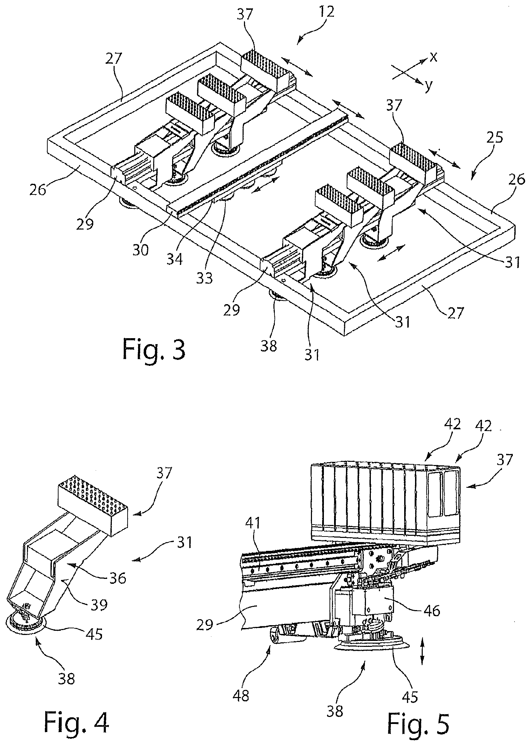

Der beladeseitige Auflagenteil 9 liegt in Figur 1 auf einer rahmenartigen Tragstruktur 11 der Maschine 1 auf, die Teil des Maschinen-Grundgestells 23 ist. Unter dem beladeseitigen Auflagenteil 9 ist eine in Figur 1 verdeckte Be- und Entladevorrichtung 12 (Figur 2 und 3) angeordnet. Die Be- und Entladevorrichtung 12 ist über einem Werkstücklager angeordnet, in dem dargestellten Beispielfall über einer Rohblechpalette 13. Auf der Rohblechpalette 13 sind unbearbeitete plattenförmige Werkstücke beziehungsweise Rohbleche 14 gestapelt. Alternativ können auch bereits zumindest teilweise bearbeitete Werkstücke bereitgestellt werden. An Schienen 15 kann die Rohblechpalette 13 zwischen einer Position innerhalb und einer Position außerhalb der rahmenartigen Tragstruktur 11 verfahren.

Im Entladebereich 3 der Maschine 1 ist eine als Produktablage vorgesehene Restgitterpalette 16 an Schienen 17 zwischen einer Position innerhalb der rahmenartigen Tragstruktur 11 und einer Position außerhalb der rahmenartigen Tragstruktur 11 verfahrbar. Die Restgitterpalette 16 lagert Bearbeitungsprodukte in Form von Restgittern 18.

Die Figur 1 zeigt des Weiteren eine Werkstück-Bewegungsvorrichtung 19, welche motorisch längs der Tragstruktur 11 in X-Richtung verfahrbar angetrieben ist. Spannpratzen 20 der Werkstück-Bewegungsvorrichtung 19 dienen zur klemmenden Fixierung eines Rohblechs 14 bzw. eines Restgitters 18 an der Werkstück-Bewegungsvorrichtung 19.

In Figur 2 ist perspektivisch das Auflagenteil 9 des Beladebereichs 2 dargestellt, wobei eine Werkstückauflage 8 des Auflagenteils 9 teils freigeschnitten ist. Die unterhalb der Werkstückauflage 8 des Auflagenteils 9 angeordnete Be- und Entladevorrichtung 12 wird dadurch ersichtlich. Die Be- und Entladevorrichtung 12 ist an dem Maschinen-Grundgestell 23 motorisch auf und ab bewegbar gelagert. Die Be- und Entladevorrichtung 12 umfasst einen Tragrahmen 25 (Figur 3), der zwei Tragstreben 26 umfasst und der beispielsweise auf einem vorspringenden Teil des Maschinen-Grundgestells 23 aufliegt. Bevorzugt ist der Tragrahmen 25 als ein rundum geschlossener Rahmen durch die Tragstreben 26 und zwei Querstreben 27 gebildet. Zwischen den zwei Querstreben 27 sind mehrere Tragbalken 29 in und entgegen der Y-Richtung verfahrbar an den Tragstreben 26 aufgenommen. Zwei der drei Tragbalken 29 sind beispielsweise motorisch angetrieben. An den motorisch angetriebenen Tragbalken 29 sind ein oder mehrere Be- und Entlademodule 31 vorgesehen. Ein nicht angetriebener Tragbalken 30, der zwischen den beiden angetriebenen Tragbalken 29 verfahrbar positioniert ist, nimmt ein oder mehrere Greifvorrichtungen 33 auf. Beispielsweise sind drei Greifvorrichtungen 33 an einem Schlitten 34 vorgesehen, der entlang des Tragbalkens 30 verschiebbar ist. Bevorzugt ist der Schlitten 34 nicht angetrieben. Der Schlitten 34 kann durch einen nicht näher dargestellten Pneumatik-Zylinder in eine Ausgangsposition zurückgesetzt werden, sofern der Schlitten 34 beispielsweise beim Einschieben eines unbearbeiteten Werkstücks 14 in die Spannpratzen 20 der Werkstück-Bewegungsvorrichtung 19 in eine von der Ausgangsposition abweichende Position übergeführt wurde.

Die Tragbalken 29 sind längs der Tragstreben 26 mittels eines nicht näher dargestellten Antriebs gesteuert verfahrbar. Dabei kann ein Riemenantrieb vorgesehen sein, der beispielsweise an dem ersten und dritten Tragbalken 29 angreift, wobei zwischen den Tragbalken 29 und dem Riemenantrieb jeweils eine ansteuerbare Kupplung vorgesehen sein kann, um die Verfahrbewegung der Tragbalken 29 individuell anzusteuern. Der mittlere Tragbalken 30 wird dabei zwangsweise durch einen der äußeren Tragbalken 29 mit bewegt.

In Figur 4 ist perspektivisch und schematisch das Be- und Entlademodul 31 dargestellt. Dieses Be- und Entlademodul 31 weist einen Führungsabschnitt 36 auf, der den Tragbalken 29 zumindest teilweise zur Führung des Be- und Entlademoduls 31 umgreift. Oberhalb des Führungsabschnittes 36 ist eine Aushebevorrichtung 37, und unterhalb des Führungsabschnittes 36 ist eine Greifvorrichtung 38 angeordnet. Bevorzugt sind die Aushebevorrichtung 37 und die Greifvorrichtung 38 durch die Seitenwange 39 feststehend zueinander positioniert. Die Aushebevorrichtung 37 und die Greifvorrichtung 38 sind in Längsrichtung des Tragbalkens 29 gesehen versetzt zueinander angeordnet.

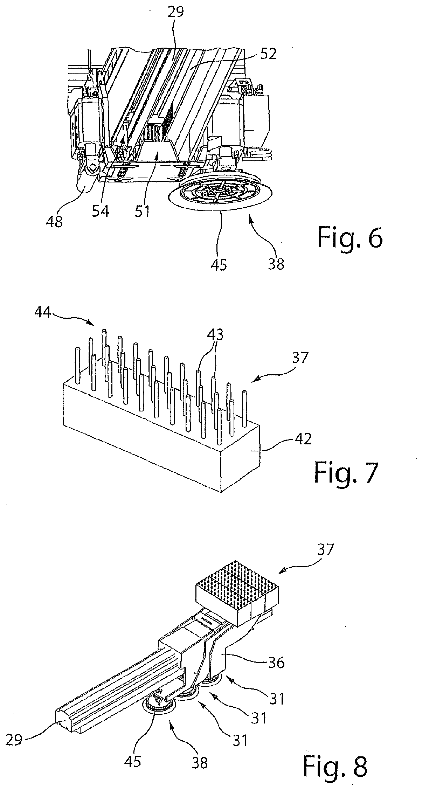

Die Figur 5 zeigt eine schematische Detailansicht des Be- und Entlademoduls 31 am Tragbalken 29. Mittels einer Linearführung 41 ist das Be- und Entlademodul 31 entlang des Tragbalkens 29 verfahrbar geführt. Die Aushebevorrichtung 37 umfasst mehrere Stiftmodule 42, welche aneinandergereiht vorgesehen sind. Jedes Stiftmodul 42 umfasst beispielsweise drei Aushebestifte 43 (Figur 7), die in einer gemeinsamen Längsachse im Stiftmodul 42 angeordnet sind. Die Längsachse der Stiftmodule 42 ist parallel zur Längsrichtung des Tragbalkens 29 ausgerichtet. Die aneinander gereihten Stiftmodule 42 erstrecken sich in Y-Richtung, also parallel zur Verfahrrichtung des Tragbalkens 29 bzw. quer zur Längsachse des Tragbalkens 29 über die Breite des Tragbalkens 29 hinaus. Zum Aus- und Einfahren der Stifte 43 des jeweiligen Stiftmoduls 42 werden diese pneumatisch angetrieben. Bevorzugt kann jedes Stiftmodul 42 angesteuert werden. Auch kann vorgesehen sein, dass jeder einzelne Aushebestift 43 im Stiftmodul 42 einzeln ausfahrbar angesteuert wird.

Der Aushebevorrichtung 37 gegenüberliegend und nach unten weisend ist ein Saugelement 45 der Greifvorrichtung 38 dargestellt. Dieses Saugelement 45 ist beispielsweise als Vakuumsauger ausgebildet. Das Saugelement 45 ist vertikal mittels eines Antriebs 46 auf und ab bewegbar. Benachbart zur Greifvorrichtung 38, vorteilhafterweise auf einer gegenüberliegenden Seite des Tragbalkens 29 ist ein Niederhalter 48 vorgesehen, der auf einem gleichen Niveau wie das Saugelement 45 vorgesehen ist und eine Abstützrolle 49 aufweist.

Aus einer perspektivischen Ansicht von unten auf den Tragbalken 29 gemäß Figur 6 ist ein Antrieb 51 ersichtlich, durch welchen das oder die Be- und Entlademodul(e) 31 entlang des Tragbalkens 29 motorisch verfahrbar sind. Bevorzugt ist ein Riemenantrieb mit einem Antriebsriemen 52 vorgesehen, wobei das Be- und Entlademodul 31 an den Antriebsriemen 52 für eine Verfahrbewegung ankuppelbar ist.

In Figur 7 ist perspektivisch eine Ansicht auf die Aushebevorrichtung 37 mit ausgefahrenen Aushebestiften 43 dargestellt. Beispielhaft sind alle Aushebestifte 43 der Stiftmodule 42 in einer Arbeitsposition 44 dargestellt, in welcher die Aushebestifte 43 vollständig ausgefahren sind.

Bei mehreren, an dem Tragbalken 29 angeordneten Be- und Entlademodulen 31 können diese aneinander anliegend positioniert werden, wie dies in Figur 8 dargestellt ist, oder unabhängig und getrennt voneinander am Tragbalken 29 positioniert werden, wie dies in Figur 3 dargestellt ist. Die Aushebevorrichtungen 37 bzw. die Stiftmodule 42 können aneinander angrenzend positioniert sein, um einen großflächigen Aushebebereich für größere auszuhebende Werkstückteile zu schaffen. Die Führungsabschnitte 36 sind derart ausgebildet, dass diese ineinandergreifend oder aneinandergereiht anordenbar sind, wie es aus Figur 8 ersichtlich ist.

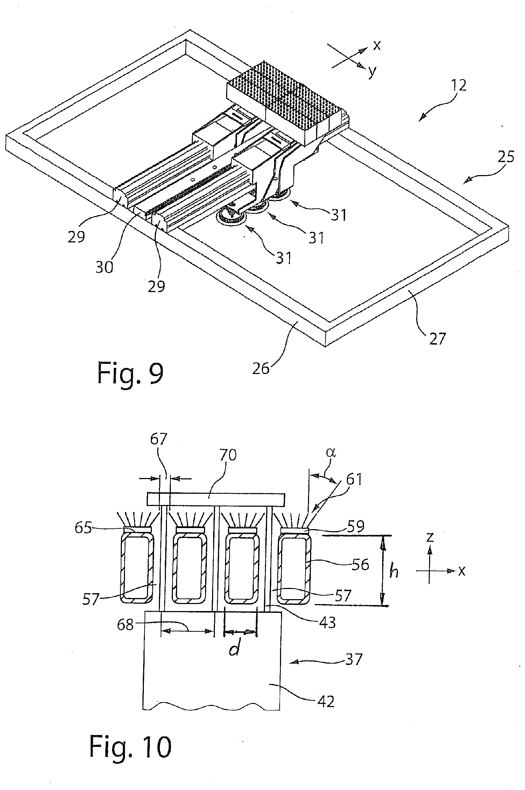

In Figur 9 ist eine weitere Anordnung der Be- und Entlademodule 31 zur Bildung einer größeren Aushebefläche dargestellt. Die beiden äußeren motorisch angetriebenen Tragbalken 29 sind aufeinander zu bewegt. Dabei liegen die jeweiligen Stirnseiten der Aushebevorrichtungen 37 des linken und rechten Tragbalkens 29 bündig aneinander an und überspannen den nicht angetriebenen Tragbalken 30. Dazu ist eine Anzahl von Stiftmodulen 42 ausgewählt, die sich quer zur Längsrichtung des Tragbalkens 29 über die halbe Breite des nicht angetriebenen Tragbalkens 30 erstrecken.

In Figur 10 ist eine schematische Schnittansicht der Werkstückauflage 8 aus Figur 2 dargestellt. Die Werkstückauflage 8 ist aus einer Vielzahl von nebeneinander angeordneten Profilkörpern 56 gebildet, welche mit einem zwischengebildeten Spalt 57 zueinander angeordnet sind. Die Längsachsen der Profilkörper 56 sind in Y-Richtung ausgerichtet. Die Profilkörper 56 erstrecken sich mit einer Länge l (Figur 2) zum Rahmen 58 der Werkstückauflage 9. Die Profilkörper 56 können beispielsweise als rechteckförmige Rohre mit einer Breite d und einer Höhe h ausgebildet sein. Das Verhältnis der Länge l der Profilkörper 56 zu einer Breite d der Profilkörper 56 ist bevorzugt kleiner als 150 ausgebildet. Das Verhältnis einer Länge l der Profilkörper 56 zu einer Höhe h der Profilkörper ist bevorzugt kleiner als 100 ausgebildet. Insbesondere ist bei solchen Verhältnissen ein biegesteifer Profilkörper 56 ausgebildet, welcher in der Gesamtheit eine steife Werkstückauflage 9 bildet, um die bei einer Bewegung eines aufliegenden Werkstücks 14 oder eines Werkstückteils 70 wirkenden Kräfte aufzunehmen. Diese rechteckförmigen Rohre sind an oder in einem gemeinsamen Rahmen 58 angeordnet und derart ausgerichtet, dass die Längsseiten der Rohre den Spalt 57 bilden und die obere Schmalseite bzw. Stirnseite 65 eine Auflagefläche für ein Bürstenelement 59 bildet. Die Spaltbreite 57 ist größer als der Durchmesser des Aushebestiftes 43, vorzugsweise entspricht die Spaltbreite dem 1,5 bis 3-fachen des Durchmessers des Aushebestiftes 43. Der Abstand 68 der Spalte 57 zueinander, d.h. der Abstand ihrer Spaltmitten, ist kleiner als 100 mm.

Das Bürstenelement 59, welches in Form einer Bürstenleiste ausgebildet ist, weist eine Vielzahl von sich in Quer- und Längsrichtung erstreckenden Borstenbündeln 61 auf, die gemeinsam eine Werkstückauflagefläche der Werkstückauflage 8 bilden. Entlang einer Längsseite des Bürstenelements 59 ist zumindest eine äußere Reihe von Borstenbündeln 61 nach außen unter einem Winkel a gegenüber der Senkrechten geneigt ausgerichtet. Der Winkel a beträgt weniger als 45°. Diese nach außen weisenden Borstenbündel 61 verringern dadurch die Breite des Spalts 57, so dass eine Lücke 67 verbleibt, die unter einem Wert von 10 mm liegt, so dass eine ausreichend geschlossene Werkstückauflagefläche für ein darauf aufliegendes Werkstückteil 70 gebildet ist. Zum Ausheben des Werkstückteils 70 gegenüber der Werkstückauflageebene oder der Werkstückauflagefläche können die Aushebestifte 43 durch den Spalt 57 hindurch und an den Borstenbündeln 61 vorbei nach oben geführt werden, so dass in einfacher Weise ein Abheben des Werkstückteils 70 gegenüber der Werkstückauflage 8, ermöglicht ist.

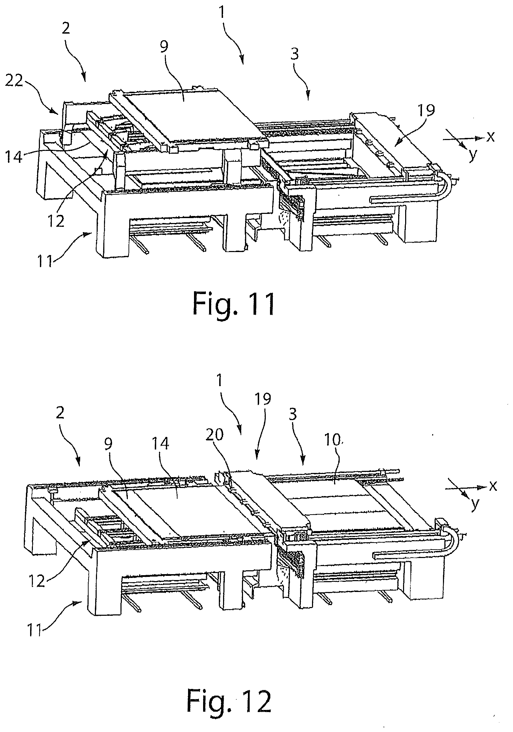

In den Figuren 11 bis 14 wird nachfolgend ein Arbeitsablauf zum Beladen von einem unbearbeiteten Werkstück bzw. einem Rohblech 14 und Entladen von zumindest einem bearbeiteten Werkstückteil 70 mit der Be-und Entladevorrichtung 12 näher beschrieben.

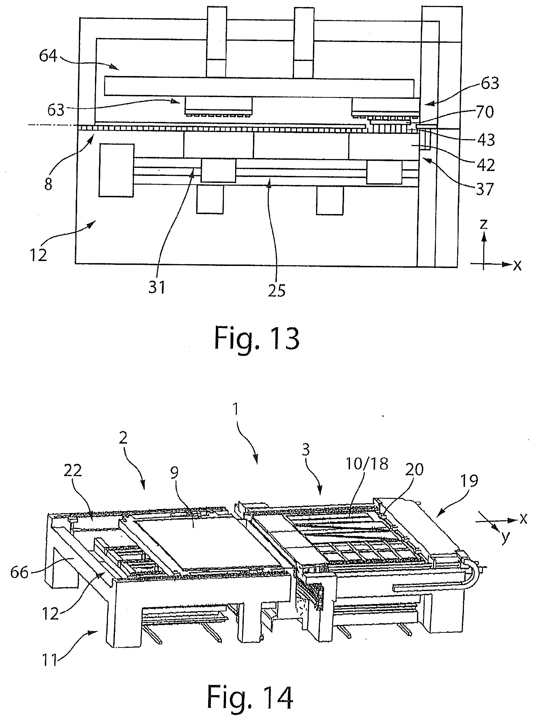

Zum Beladen einer Werkstückauflage 8 einer Maschine 1 mit einem Rohblech 14, ausgehend von einer Anordnung des ersten Auflagenteils 9 und des weiteren Auflagenteils 10 gemäß Figur 1, wird die Be- und Entladevorrichtung 12 auf ein unteres Hubniveau abgesenkt, so dass ein auf dem Werkstückstapel bereitgestelltes Rohblech 14 mit der Greifvorrichtung 38 der Be- und Entlademodule 31 ergriffen wird. Anschließend wird die Be- und Entladevorrichtung 12 auf ein Beladeniveau angehoben, wobei gleichzeitig auch der erste Auflagenteil 9 nach oben geführt wird. Dazu wird der Rahmen 58 des Auflagenteils 9 durch den Tragrahmen 25 der Be- und Entladevorrichtung 12 von einer Auflagefläche bzw. von Auflagepunkten am Maschinen-Grundgestell 23 abgehoben und nach oben bewegt. Darauffolgend fährt der weitere Auflagenteil 10 in den Beladebereich 2 ein und wird unterhalb der Be- und Entladevorrichtung 12 positioniert (Figur 11). Anschließend wird das Rohblech 14 mittels der Be- und Entladeeinrichtung 12 auf dem weiteren Auflagenteil 10 abgelegt und in die Spannpratzen 20 der Werkstück-Bewegungsvorrichtung 19 eingeschoben. Nach Aufhebung des Vakuums fährt der weitere Auflagenteil 10 gemeinsam mit der Werkstück-Bewegungsvorrichtung 19 in den Entladebereich 3. Der Auflagenteil 9 wird auf ein Arbeitsniveau abgesenkt, so dass der Auflagenteil 9 und der Auflagenteil 10 auf demselben Arbeitsniveau positioniert sind, wie dies in Figur 12 dargestellt ist. Anschließend erfolgt eine nicht näher dargestellte Bearbeitung des Rohblechs 14 und/oder einzelner Werkstückteile 70. Kleinere Werkstückteile können über einen Spalt zwischen dem ersten und weiteren Auflagenteil 9,10 aus der Maschine 1 ausgeschleust werden. Zum Entladen größerer Werkstückteile 70 werden die Be- und Entlademodule 31 der Be- und Entladevorrichtung 12 in einem Aushebeniveau positioniert, in dem die Aushebevorrichtung 37 unmittelbar an eine Unterseite der Werkstückauflage 8 angrenzend positioniert wird (Figur 13). Darauffolgend oder gleichzeitig werden Halteelemente 63 mittels einer Halteelement-Bewegungseinrichtung 64 über dem auszuhebenden Werkstückteil 70 positioniert. Das Halteelement 63 oder die Halteelemente 63 werden auf das aufzuhebende Werkstückteil 70 abgesenkt und zur Anlage gebracht. Darauffolgend werden die Aushebestifte 43 der Stiftmodule 42 entsprechend der Größe des Werkstückteils 70 zum Ausfahren angesteuert, so dass diese durch die Spalte 57 zwischen den Profilkörpern 56 der Werkstückauflage 8 hindurchgeführt werden und zur Anlage an einer Unterseite des Werkstückteils 70 kommen. Die Halteelemente 63 sind vorzugsweise als Sauggreifer ausgebildet und ergreifen das Werkstückteils 70. Darauffolgend wird das Werkstückteil 70 mit dem Halteelement 63 vertikal nach oben (Z-Richtung) bewegt. Aufgrund der an den Aushebestiften 43 anliegenden Druckkraft wird die Aushebebewegung des Werkstückteils 70 ggf. gegenüber dem Restgitter 18 unterstützt. Im Falle eines Verkantens oder Verhaken des Werkstückteils 70 mit dem Restgitter 18 kann dadurch ein Freikommen des Werkstückteils 70 erzielt werden. Anschließend wird das Halteelement 63 in einen Bereich außerhalb des Auflagenteils 9,10 verfahren und das Werkstückteil 70 abgelegt. Beispielsweise kann an einer Stirnseite 66 des Maschinen-Grundgestells 23 eine Stapelvorrichtung oder Aufnahmevorrichtung oder Palette vorgesehen sein, welche zur Aufnahme der bearbeiteten Werkstückteile 70 dienen.

Durch diesen Entladevorgang mit dem Be- und Entlademodul 31 können alle geschnittenen Werkstückteile 70 entladen werden. Es können auch nur solche Werkstückteile 70 entladen werden, die eine Größe aufweisen, welche nicht durch einen Spalt zwischen dem Auflagenteil 9 und dem weiteren Auflagenteil 10 herausgeführt werden können.

Anschließend wird das Restgitter 18 in den Entladebereich 3 übergeführt. Ausgehend von dem im Entladebereich 3 angeordneten Restgitter 18 (Figur 14) wird der erste Auflagenteil 9 ein Beladeniveau angehoben. Das weitere Auflagenteil 10 wird in eine Beladeposition verfahren, wie dies in Figur 11 dargestellt ist. Darauffolgend kann das Restgitter 18 nach unten entsorgt und auf der Restgitterpalette 16 abgelegt werden. Ein weiterer Beladezyklus kann beginnen.

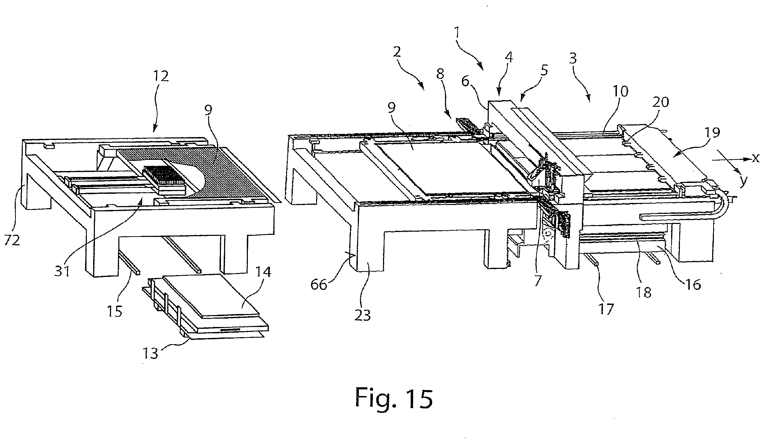

In Figur 15 ist eine weitere alternative Ausführungsform der Maschine 1 mit einer zum Maschinen-Grundgestell 23 positionierten Be- und Entladevorrichtung 12 dargestellt. Diese Be- und Entladevorrichtung 12 weist ein eigenes Gestell 72 auf und ist beispielsweise einer Stirnseite 66 des Maschinen-Grundgestells 23 zugeordnet. Der Be- und Entladevorgang von einem unbearbeiteten Werkstück bzw. Rohblech 14 und geschnittenen Werkstückteilen 70 erfolgt in Analogie zu dem vorbeschriebenen Verfahrensablauf gemäß den Figuren 11 bis 14, wobei in diesem Beispiel nur der erste Auflagenteil 9 horizontal in der X-Richtung verfahrbar sein muss, um in die Be- und Entladevorrichtung 12 ein- und ausgefahren bzw. unter- bzw. oberhalb des Tragrahmens 25 angeordnet zu werden, wie dies im Beladebereich 2 der Maschine 1 zu den Figuren 11 bis 14 beschrieben ist. In einer weiteren alternativen Maschine 1 kann die Werkstückauflage 8 durchgehend ausgebildet und als Ganzes horizontal verfahrbar sein.

Die separate Zuordnung der Be- und Entladevorrichtung 12 zur Maschine 1 weist den Vorteil auf, dass nachträglich die Prozesszeit aufgrund einer automatisierten Be- und Entladung erhöht werden kann.

## Patentansprüche

1. Be- und Entladevorrichtung für eine Maschine zum trennenden Bearbeiten von plattenförmigen Werkstücken, mit zwei Tragstreben (26), die insbesondere an einem Tragrahmen (25) ausgebildet und an einem Grundgestell (23, 72) vertikal auf und ab bewegbar anordenbar sind, mit zumindest einem Tragbalken (29), welcher horizontal verfahrbar an den Tragstreben (26) gelagert ist, und mit wenigstens einem an dem Tragbalken (29) verfahrbar aufgenommenen Be- und Entlademodul (31), **dadurch gekennzeichnet, dass** das Be- und Entlademodul (31) eine vertikal nach oben ausgerichtete Aushebevorrichtung (37) zum Anheben eines freigetrennten Werkstückteils (70) und eine vertikal nach unten ausgerichtete Greifvorrichtung (38) zum Halten von einem unbearbeiteten, plattenförmigen Werkstück (14) aufweist.

2. Be- und Entladevorrichtung nach Anspruch 1, **dadurch gekennzeichnet, dass** die Aushebevorrichtung (37) oberhalb und die Greifvorrichtung (38) unterhalb zum Tragbalken (29) positioniert sind und/oder dass die Aushebevorrichtung (37) und die Greifvorrichtung (38) durch einen gemeinsamen Führungsabschnitt (36) feststehend einander zugeordnet und vorzugsweise durch den Führungsabschnitt (36) am Tragbalken (29) verfahrbar gelagert sind.

3. Be- und Entladevorrichtung nach einem der vorhergehenden Ansprüche, **dadurch gekennzeichnet, dass** die Aushebevorrichtung (37) in Längsrichtung des Tragbalkens (29) versetzt zur Greifvorrichtung (38) angeordnet ist, so dass in einer Endposition des Be- und Entlademoduls (31) am Tragbalken (29) die Aushebevorrichtung (37) eine Tragstrebe (26) überdeckt.

4. Be- und Entladevorrichtung nach einem der vorhergehenden Ansprüche, **dadurch gekennzeichnet, dass** mehrere an dem Tragbalken (29) verfahrbar aufgenommene Be- und Entlademodule (31) in eine Position zueinander überführbar sind, in der die Aushebevorrichtungen (37) aneinandergrenzend angeordnet sind und eine großflächige Aushebeeinheit bilden.

5. Be- und Entladevorrichtung nach einem der vorhergehenden Ansprüche, **dadurch gekennzeichnet, dass** an den Tragstreben (26) wenigstens ein entlang der Tragstreben (26) angetrieben verfahrbarer Tragbalken (29) und wenigstens ein verfahrbarer und nicht angetriebener Tragbalken (30) angeordnet sind und vorzugsweise, **dadurch gekennzeichnet, dass** der nicht angetriebene Tragbalken (30) nur eine oder mehrere Greifvorrichtungen (38) aufweist und insbesondere mehrere Greifvorrichtungen (38) des nicht angetriebenen Tragbalkens (30) an einen am Tragbalken (30) geführten Schlitten (34) angeordnet sind, der vorzugsweise mit einem Rückstellelement in eine Ausgangsposition zurückführbar ist.

6. Be- und Entladevorrichtung nach einem der vorhergehenden Ansprüche, **dadurch gekennzeichnet, dass** die Aushebevorrichtung (37) sich quer zum Tragbalken (29) derart erstreckt, dass bei einer Aneinanderreihung von zwei angetriebenen Tragbalken (29) und einem dazwischenliegenden, nicht angetriebenen Tragbalken (30) die beiden Aushebevorrichtungen (37) der angetriebenen Tragbalken (29) stirnseitig aneinander anliegen.

7. Be- und Entladevorrichtung nach einem der vorhergehenden Ansprüche, **dadurch gekennzeichnet, dass** die Aushebevorrichtung (37) aus mehreren, einzeln ansteuerbaren Stiftmodulen (42) besteht, welche einen oder mehrere Aushebestifte (43) zum Aus- und Einfahren aufweisen und vorzugsweise die Ausfahrbewegung der Aushebestifte (43) pneumatisch angesteuert ist und vorzugsweise die Greifvorrichtung (38) zumindest ein Saugelement (45) aufweist, welches in vertikaler Richtung auf und ab bewegbar ist.

8. Be- und Entladevorrichtung nach einem der vorhergehenden Ansprüche, **dadurch gekennzeichnet, dass** eine gemeinsame Druckluftversorgung für eine Ansteuerung der Aushebevorrichtung (37) und für eine vertikale Bewegung der Greifvorrichtung (38) vorgesehen ist.

9. Be- und Entladevorrichtung nach einem der vorhergehenden Ansprüche, **dadurch gekennzeichnet, dass** benachbart zur Greifvorrichtung (38) vertikal nach unten gerichtet an dem Be- und Entlademodul (31) ein Niederhalter (48) angeordnet ist.

10. Maschine zur trennenden Bearbeitung von plattenförmigen Werkstücken mit einer Werkstückauflage (8) zur Lagerung eines zu bearbeitenden Werkstücks (14) während einer Bearbeitung des Werkstücks (14) und zur Lagerung eines bearbeiteten Werkstückteils (70), **dadurch gekennzeichnet, dass** eine Be- und Entladevorrichtung (12) nach einem der vorstehenden Ansprüche vertikal bewegbar unterhalb oder seitlich benachbart zu der Werkstückauflage (8) angeordnet ist und dass die Werkstückauflage (8) oder ein Auflagenteil (10) der Werkstückauflage (8) horizontal über und unter die Be- und Entladevorrichtung (12) verfahrbar ist.

11. Maschine nach Anspruch 10, **dadurch gekennzeichnet, dass** eine Werkstückauflagefläche der Werkstückauflage (8) oder eines Auflagenteils (9) der Maschine (1) durch mehrere Profilkörper (56) ausgebildet ist, welche parallel zueinander unter Bildung eines Spaltes (57) beabstandet sind, und jeder der Profilkörper (56) Auflagekugeln oder Rollen oder ein Bürstenelement (59) aufnimmt, welches sich entlang des Profilkörpers (56) erstreckt und vorzugsweise die Aushebevorrichtung (37) mehrere Aushebestifte (43) zum Aus- und Einfahren aufweist, die in der Richtung senkrecht zu den Profilkörpern (56) einen Abstand zueinander aufweisen, der dem Abstand der Spalte (57) entspricht.

12. Maschine nach einem der Ansprüche 10 bis 11, **dadurch gekennzeichnet, dass** die Be- und Entladevorrichtung (12) unter einem Auflagenteil (9) der Werkstückauflage (8) angeordnet ist und der Auflagenteil (9) mittels der Be- und Entladevorrichtung (12) in vertikaler Richtung bewegbar ist.

13. Maschine nach Anspruch 10, **dadurch gekennzeichnet, dass** eine Werkstückauflagefläche der Werkstückauflage (8) durch mehrere Profilkörper (56) ausgebildet ist, welche parallel zueinander unter Bildung eines Spaltes (57) beabstandet sind, und dass jeder der Profilkörper (56) Auflagekugeln oder Rollen oder zumindest ein Bürstenelement (59) aufnimmt, welches sich entlang des Profilkörpers (56) erstreckt.

14. Maschine nach Anspruch 13, **dadurch gekennzeichnet, dass** die Profilkörper (56) in deren Längserstreckungsrichtung biegesteif sind, und insbesondere als ein rechteckförmiges oder mehreckförmiges Rohr oder als ein T- oder H-förmiger Profilkörper (56) ausgebildet sind und vorzugsweise das Verhältnis einer Länge der Profilkörper (56) zu einer Breite der Profilkörper (56) kleiner als 150 und insbesondere das Verhältnis einer Länge der Profilkörper (56) zu einer Höhe der Profilkörper (56) kleiner als 100 ist.

15. Maschine nach einem der Ansprüche 13 bis 14, **dadurch gekennzeichnet, dass** der Profilkörper (56) eine zur Werkstückauflagefläche parallel ausgerichtete Stirnseite (65) aufweist, auf der ein Bürstenelement (59), vorzugsweise austauschbar, vorgesehen ist und vorzugsweise das Bürstenelement (59) mehrere Spalten und/oder Reihen von Borstenbündeln (61) umfasst und zumindest eine sich entlang einer äußeren Längskante des Bürstenelementes (59) erstreckende Reihe von Borstenbündeln (61) gegenüber einer vertikalen Ausrichtung seitlich nach außen, insbesondere unter einem Winkel (a) gegenüber der Senkrechten zur Werkstückauflage (8) von < 45°, geneigt ist.

16. Maschine nach einem der Ansprüche 13 bis 15, **dadurch gekennzeichnet, dass** eine zwischen zwei Bürstenelementen (59) entlang des Spalts (57) verbleibende Lücke (67) kleiner ist als 10 mm oder der Spalt (57) durch die zwei Bürstensegmente (59) geschlossen ist und vorzugsweise der Abstand (68) der Spaltmitten der Spalte (57) kleiner ist als 100 mm.

17. Verfahren zum Be- und Entladen von Werkstücken (14) und bearbeiteten Werkstückteilen (70) auf einer Werkstückauflage (8) einer Maschine (1) nach Anspruch10, **dadurch gekennzeichnet, dass** zwischen dem Entladen eines freigetrennten Werkstückteils (70) mittels zumindest einer Aushebevorrichtung (37) eines Be- und Entlademoduls (31) der Be- und Entladevorrichtung (12) und dem Beladen der Werkstückauflage (8) mit einem neuen Werkstück (14) eine vertikale Bewegung der Be- und Entladevorrichtung (12) und eine horizontale Bewegung der Werkstückauflage (8) oder eines Auflagenteils (10) der Werkstückauflage (8) über oder unter die Be- und Entladevorrichtung (12) erfolgt und vorzugsweise die Aushebevorrichtung (37) Aushebestifte (43) aufweist und die Aushebestifte (43) zum Ausheben eines Werkstückteils (70) durch Spalte (57) in der Werkstückauflage (8) hindurchgeführt und zur Anlage an der Unterseite des auszuhebenden Werkstückteils (70) übergeführt und vorzugsweise beim Heben des Werkstücks (70) mit dem Halteelement (63) die Aushebestifte (43) gegenüber der Werkstückauflagefläche (8) weiter mit einer Druckkraft nach oben ausgefahren werden.

## Claims

1. Loading and unloading device for a machine for the separating processing of plate-shaped workpieces, having two support struts (26) which are formed in particular on a support frame (25) and are arrangeable on a base frame (23, 72) so as to be vertically movable up and down, having at least one support beam (29) which is mounted on the support struts (26) so as to be horizontally movable, and with at least one loading and unloading module (31) received on the support beam (29) in a movable manner, **characterized in that** the loading and unloading module (31) has a vertically upwardly aligned lifting device (37) for lifting a freely separated workpiece part (70) and a vertically downwardly aligned gripping device (38) for holding an unprocessed, plate-shaped workpiece (14).

2. Loading and unloading device according to claim 1, **characterized in that** the lifting device (37) is positioned above and the gripping device (38) is positioned below the support beam (29) and/or **in that** the lifting device (37) and the gripping device (38) are fixedly assigned to one another by a common guide section (36) and are preferably mounted on the support beam (29) so as to be movable by the guide section (36).

3. Loading and unloading device according to one of the preceding claims, **characterized in that** the lifting device (37) is arranged offset to the gripping device (38) in the longitudinal direction of the support beam (29), so that in an end position of the loading and unloading module (31) on the support beam (29), the lifting device (37) covers a support strut (26).

4. Loading and unloading device according to one of the preceding claims, **characterized in that** a plurality of loading and unloading modules (31) accommodated movably on the support beam (29) are transferrable into a position relative to one another, in which the lifting devices (37) are arranged adjacent to one another and form a large-area lifting unit.

5. Loading and unloading device according to one of the preceding claims, **characterized in that** at least one supporting beam (29), which is moveable in a driven manner along the supporting struts (26), and at least one movable and non-driven supporting beam (30) are arranged on the supporting struts (26), and preferably **characterized in that in that** the non-driven support beam (30) has only one or more gripping devices (38) and, in particular, a plurality of gripping devices (38) of the non-driven support beam (30) are arranged on a carriage (34) which is guided on the support beam (30) and are preferably returnable to an initial position by means of a return element.

6. Loading and unloading device according to one of the preceding claims, **characterized in that** the lifting device (37) extends transversely to the support beam (29) in such a way that, when two driven support beams (29) and an intermediate, non-driven support beam (30) are arranged in a row, the two lifting devices (37) of the driven support beams (29) bear against one another at the end faces.

7. Loading and unloading device according to one of the preceding claims, **characterized in that** the lifting device (37) comprises a plurality of individually controllable pin modules (42) which have one or more lifting pins (43) for extending and retracting and preferably the extending movement of the lifting pins (43) is pneumatically controlled and preferably the gripping device (38) has at least one suction element (45) which can be moved up and down in the vertical direction.

8. Loading and unloading device according to one of the preceding claims, **characterized in that** a common compressed air supply is provided for actuation of the lifting device (37) and for vertical movement of the gripping device (38).

9. Loading and unloading device according to one of the preceding claims, **characterized in that** a hold-down device (48) is arranged vertically downwards on the loading and unloading module (31) adjacent to the gripping device (38).

10. Machine for the separating machining of plate-shaped workpieces with a workpiece support (8) for supporting a workpiece (14) to be machined during machining of the workpiece (14) and for supporting a machined workpiece part (70), **characterized in that in that** a loading and unloading device (12) according to one of the preceding claims is arranged vertically movably below or laterally adjacent to the workpiece support (8) and **in that** the workpiece support (8) or a support part (10) of the workpiece support (8) is moveable horizontally above and below the loading and unloading device (12).

11. Machine according to claim 10, **characterized in that** a workpiece support surface of the workpiece support (8) or of a support part (9) of the machine (1) is formed by a plurality of profiled bodies (56) which are spaced apart parallel to one another, forming a gap (57), and each of the profiled bodies (56) accommodates support balls or rollers or a brush element (59), which extends along the profiled body (56) and preferably the lifting device (37) has a plurality of lifting pins (43) for extending and retracting, which are spaced apart in the direction perpendicular to the profiled bodies (56) by a distance which corresponds to the distance between the gaps (57).

12. Machine according to one of claims 10 to 11, **characterized in that** the loading and unloading device (12) is arranged under a support part (9) of the workpiece support (8) and the support part (9) is moveable in the vertical direction by means of the loading and unloading device (12).

13. Machine according to claim 10, **characterized in that** a workpiece support surface of the workpiece support (8) is formed by a plurality of profiled bodies (56) which are spaced apart parallel to one another, forming a gap (57), and **in that** each of the profiled bodies (56) accommodates support balls or rollers or at least one brush element (59) which extends along the profiled body (56).

14. Machine according to claim 13, **characterized in that** the profiled bodies (56) are flexurally rigid in their longitudinal direction of extension and are designed in particular as a rectangular or polygonal tube or as a T-shaped or H-shaped profiled body (56) and preferably the ratio of a length of the profiled bodies (56) to a width of the profiled bodies (56) is less than 150 and in particular the ratio of a length of the profiled bodies (56) to a height of the profiled bodies (56) is less than 100.

15. Machine according to one of claims 13 to 14, **characterized in that** the profiled body (56) has an end face (65) which is aligned parallel to the workpiece support surface and on which a brush element (59), preferably exchangeable, is provided, and preferably the brush element (59) comprises a plurality of columns and/or rows of bristle bundles (61) and at least one row of bristle bundles (61) extending along an outer longitudinal edge of the brush element (59) is inclined laterally outwards with respect to a vertical alignment, in particular at an angle (a) with respect to the perpendicular to the workpiece support (8) of < 45°, is inclined.

16. Machine according to one of claims 13 to 15, **characterized in that** a gap (67) remaining between two brush elements (59) along the gap (57) is smaller than 10 mm or the gap (57) is closed by the two brush segments (59) and preferably the distance (68) between the gap centers of the gaps (57) is smaller than 100 mm.

17. Method for loading and unloading workpieces (14) and machined workpiece parts (70) on a workpiece support (8) of a machine (1) according to claim 10, **characterized in that in that** a vertical movement of the loading and unloading device (12) and a horizontal movement of the workpiece support (8) or a support part (10) of the workpiece support (8) above or below the loading and unloading device (12) take place between the unloading of a workpiece part (70) which has been cut free by means of at least one lifting device (37) of a loading and unloading module (31) of the loading and unloading device (12) and the loading of the workpiece support (8) with a new workpiece (14) and preferably the lifting device (37) has lifting pins (43) and the lifting pins (43) for lifting a workpiece part (70) are guided through gaps (57) in the workpiece support (8) and transferred to bear against the underside of the workpiece part (70) to be lifted out and preferably when the workpiece (70) is lifted with the holding element (63) the lifting pins (43) are extended further upwards with a compressive force relative to the workpiece support surface (8).

## Revendications

1. Dispositif de chargement et de déchargement pour une machine d'usinage par séparation de pièces en forme de plaques, avec deux entretoises porteuses (26) qui sont réalisées en particulier sur un cadre porteur (25) et qui peuvent être disposées sur un châssis de base (23, 72) de manière à pouvoir être déplacées verticalement vers le haut et vers le bas, avec au moins une poutre porteuse (29) qui est montée sur les entretoises porteuses (26) de manière à pouvoir être déplacée horizontalement, et avec au moins un module de chargement et de déchargement (31) logé de manière mobile sur la poutre porteuse (29), **caractérisé en ce que** le module de chargement et de déchargement (31) présente un dispositif de levage (37) orienté verticalement vers le haut pour soulever une partie de pièce (70) séparée et un dispositif de préhension (38) orienté verticalement vers le bas pour maintenir une pièce (14) non usinée en forme de plaque.

2. Dispositif de chargement et de déchargement selon la revendication 1, **caractérisé en ce que** le dispositif de levage (37) est positionné au-dessus et le dispositif de préhension (38) au-dessous de la poutre porteuse (29) et/ou **en ce que** le dispositif de levage (37) et le dispositif de préhension (38) sont associés de manière fixe l'un à l'autre par un tronçon de guidage (36) commun et sont montés de préférence de manière déplaçable sur la poutre porteuse (29) par le tronçon de guidage (36).

3. Dispositif de chargement et de déchargement selon l'une des revendications précédentes, **caractérisé en ce que** le dispositif de levage (37) est décalé par rapport au dispositif de préhension (38) dans la direction longitudinale de la poutre porteuse (29), de sorte que dans une position finale du module de chargement et de déchargement (31) sur la poutre porteuse (29), le dispositif de levage (37) recouvre une entretoise porteuse (26).

4. Dispositif de chargement et de déchargement selon l'une des revendications précédentes, **caractérisé en ce que** plusieurs modules de chargement et de déchargement (31) logés de manière mobile sur la poutre porteuse (29) peuvent être transférés les uns par rapport aux autres dans une position dans laquelle les dispositifs de levage (37) sont disposés de manière contiguë et forment une unité de levage de grande surface.

5. Dispositif de chargement et de déchargement selon l'une des revendications précédentes, **caractérisé en ce que** sur les entretoises de support (26) sont disposées au moins une poutre porteuse (29) pouvant être déplacée de manière entraînée le long des entretoises porteuse (26) et au moins une poutre porteuse (30) pouvant être déplacée et non entraînée et, de préférence, **caractérisé, en ce que** la poutre porteuse non entraînée (30) ne présente qu'un ou plusieurs dispositifs de préhension (38) et en particulier plusieurs dispositifs de préhension (38) de la poutre porteuse non entraînée (30) sont disposés sur un chariot (34) guidé sur la poutre porteuse (30), qui peut être ramené de préférence dans une position initiale par un élément de rappel.

6. Dispositif de chargement et de déchargement selon l'une des revendications précédentes, **caractérisé en ce que** le dispositif de levage (37) s'étend transversalement à la poutre porteuse (29) de telle sorte que, dans le cas d'une juxtaposition de deux poutres porteuses (29) entraînées et d'une poutre porteuse (30) non entraînée située entre elles, les deux dispositifs de levage (37) des poutres porteuses (29) entraînées s'appliquent l'un contre l'autre du côté frontal.

7. Dispositif de chargement et de déchargement selon l'une des revendications précédentes, **caractérisé en ce que** le dispositif de levage (37) est constitué de plusieurs modules à broches (42) pouvant être commandés individuellement, qui présentent une ou plusieurs broches de levage (43) pour l'extension et la rétraction et, de préférence, le mouvement d'extension des broches de levage (43) est commandé pneumatiquement et, de préférence, le dispositif de préhension (38) présente au moins un élément d'aspiration (45) qui peut être déplacé vers le haut et vers le bas dans le sens vertical.

8. Dispositif de chargement et de déchargement selon l'une des revendications précédentes, **caractérisé en ce qu'**une alimentation en air comprimé commune est prévue pour une commande du dispositif de levage (37) et pour un mouvement vertical du dispositif de préhension (38).

9. Dispositif de chargement et de déchargement selon l'une des revendications précédentes, **caractérisé en ce qu'**un serre-flan (48) est disposé sur le module de chargement et de déchargement (31) au voisinage du dispositif de préhension (38), en étant orienté verticalement vers le bas.

10. Machine pour l'usinage par séparation de pièces en forme de plaques avec un support de pièce (8) pour le stockage d'une pièce à usiner (14) pendant un usinage de la pièce (14) et pour le stockage d'une partie de pièce usinée (70), **caractérisée, en ce qu'**un dispositif de chargement et de déchargement (12) selon l'une des revendications précédentes est disposé de façon verticalement mobile en dessous ou latéralement adjacente au support de pièce (8) et **en ce que** le support de pièce (8) ou une partie de support (10) du support de pièce (8) peut être déplacé horizontalement au-dessus et en dessous du dispositif de chargement et de déchargement (12).

11. Machine selon la revendication 10, **caractérisée en ce qu'**une surface de support de pièce du support de pièce (8) ou d'une partie de support (9) de la machine (1) est formée par plusieurs corps profilés (56) qui sont espacés parallèlement les uns des autres en formant une fente (57), et chacun des corps profilés (56) reçoit des billes de support ou des rouleaux ou un élément de brosse (59), qui s'étend le long du corps profilé (56) et, de préférence, le dispositif de levage (37) présente plusieurs broches de levage (43) pour l'extension et la rétraction, qui, dans la direction perpendiculaire aux corps profilés (56), présentent un écartement mutuel qui correspond à l'écartement des fentes (57).

12. Machine selon l'une des revendications 10 à 11, **caractérisée en ce que** le dispositif de chargement et de déchargement (12) est disposé sous une partie d'appui (9) du support de pièce (8) et la partie d'appui (9) est mobile dans la direction verticale au moyen du dispositif de chargement et de déchargement (12).

13. Machine selon la revendication 10, **caractérisée en ce qu'**une surface de support de pièce du support de pièce (8) est formée par plusieurs corps profilés (56) qui sont espacés parallèlement les uns des autres en formant une fente (57), et **en ce que** chacun des corps profilés (56) reçoit des billes de support ou des rouleaux ou au moins un élément de brosse (59) qui s'étend le long du corps profilé (56).

14. Machine selon la revendication 13, **caractérisée en ce que** les corps profilés (56) sont rigides à la flexion dans leur direction d'extension longitudinale, et sont réalisés en particulier sous la forme d'un tube rectangulaire ou polygonal ou d'un corps profilé (56) en forme de T ou de H, et de préférence le rapport d'une longueur des corps profilés (56) à une largeur des corps profilés (56) est inférieur à 150 et en particulier le rapport d'une longueur des corps profilés (56) à une hauteur des corps profilés (56) est inférieur à 100.

15. Machine selon l'une des revendications 13 à 14, **caractérisée en ce que** le corps profilé (56) présente une face frontale (65) orientée parallèlement à la surface d'appui de la pièce, sur laquelle un élément de brosse (59), de préférence interchangeable, et de préférence l'élément de brosse (59) comprend plusieurs colonnes et/ou rangées de faisceaux de poils (61) et au moins une rangée de faisceaux de poils (61) s'étendant le long d'un bord longitudinal extérieur de l'élément de brosse (59) est inclinée latéralement vers l'extérieur par rapport à une orientation verticale, en particulier selon un angle (a) par rapport à la perpendiculaire au support de pièce (8) de < 45°.

16. Machine selon l'une des revendications 13 à 15, **caractérisée en ce qu'**un espace (67) restant entre deux éléments de brosse (59) le long de l'interstice (57) est inférieur à 10 mm ou l'interstice (57) est fermé par les deux segments de brosse (59) et, de préférence, la distance (68) des centres des interstices (57) est inférieure à 100 mm.

17. Procédé de chargement et de déchargement de pièces (14) et de parties de pièces usinées (70) sur un support de pièces (8) d'une machine (1) selon la revendication10, **caractérisé en ce que**, qu'entre le déchargement d'une partie de pièce (70) séparée au moyen d'au moins un dispositif de levage (37) d'un module de chargement et de déchargement (31) du dispositif de chargement et de déchargement (12) et le chargement du support de pièce (8) avec une nouvelle pièce (14), un mouvement vertical du dispositif de chargement et de déchargement (12) et un mouvement horizontal du support de pièce (8) ou d'une partie de support (10) du support de pièce (8) sont effectués au-dessus ou au-dessous du dispositif de chargement et de déchargement (12), et de préférence le dispositif de levage (37) présente des broches de levage (43) et les broches de levage (43) sont guidées pour le levage d'une partie de pièce (70) à travers des fentes (57) dans le support de pièce (8) et transférées pour l'appui sur la face inférieure de la partie de pièce (70) à soulever et de préférence lors du levage de la pièce (70) avec l'élément de maintien (63), les broches de levage (43) continuent à être sorties vers le haut par rapport à la surface de support de pièce (8) avec une force de pression.
